# EUROPÄISCHE PATENTSCHRIFT

(11) **EP 3 464 857 B1**
(45) Veröffentlichungstag und Bekanntmachung des Hinweises auf die Patenterteilung: **21.01.2026**
(21) Anmeldenummer: 17724820.0
(22) Anmeldetag: 22.05.2017
(51) Int. Cl.: F02D 41/00, F01L 13/00, F02D 13/06, F02D 17/02

(54) **VERFAHREN ZUM BETREIBEN EINER BRENNKRAFTMASCHINE UND BRENNKRAFTMASCHINE**
METHOD FOR OPERATING AN INTERNAL COMBUSTION ENGINE, AND INTERNAL COMBUSTION ENGINE
PROCÉDÉ DE FONCTIONNEMENT D'UN MOTEUR À COMBUSTION INTERNE ET MOTEUR À COMBUSTION INTERNE

(30) Priorität: 07.06.2016 DE 102016209957
(43) Veröffentlichungstag der Anmeldung: 10.04.2019
(73) Patentinhaber: Volkswagen Aktiengesellschaft, 38440 Wolfsburg (DE)
(72) Erfinder: GESSENHARDT, Christopher, 39356 Weferlingen (DE); HOFFMEYER, Henrik, 30161 Hannover (DE); SCHREECK, Nico, 38553 Wasbüttel (DE)
(74) Vertreter: Bungartz, Florian
(86) Internationale Anmeldenummer: PCT/EP2017/062211
(87) Internationale Veröffentlichungsnummer: WO 2017/211574

(56) Entgegenhaltungen:
- EP-A1- 0 596 127
- EP-A2- 0 980 965
- EP-A2- 1 992 809
- DE-A1- 102011 053 333
- DE-A1- 102012 017 275
- DE-T5- 112015 000 165
- US-A1- 2003 172 900
- US-A1- 2009 007 866
- US-A1- 2015 152 756
- US-A1- 2016 032 846

## Beschreibung

Die Erfindung betrifft ein Verfahren zum Betreiben einer Brennkraftmaschine mit einem Hubkolben-Verbrennungsmotor, der in einem Teilbetrieb betrieben werden kann.

Es sind mehrzylindrige Hubkolben-Brennkraftmaschinen bekannt, die temporär in einem sogenannten Teilbetrieb betrieben werden können, in dem ein Teil der Zylinder deaktiviert sind, so dass in diesen keine thermodynamischen Kreisprozesse durchgeführt werden. Vielmehr werden die deaktivierten Zylinder von den weiterhin aktiven Zylindern mitgeschleppt. Dies erfolgt mit dem Ziel einer Wirkungsgraderhöhung für den Betrieb der Brennkraftmaschinen, weil eine Deaktivierung eines Teils der Zylinder bei im Wesentlichen gleichbleibender Antriebsleistung zu einem Betrieb der verbliebenen aktiven Zylinder mit deutlich höherer Last führt, was mit einem höheren spezifischen Wirkungsgrad der in diesen Zylindern durchgeführten thermodynamischen Kreisprozesse einhergeht. Um die für die aktiven Zylinder erreichbare Wirkungsgradsteigerung nur möglichst wenig durch das Mitschleppen der deaktivierten Zylinder zu verringern ist in der Regel vorgesehen, die den deaktivierten Zylindern zugeordneten Gaswechselventile im Teilbetrieb geschlossen zu halten, wodurch das innerhalb der von diesen Zylindern ausgebildeten Brennräume angeordnete Gas zyklisch komprimiert und expandiert, jedoch nicht ausgestoßen wird. Eine Verlustleistung infolge einer Komprimierung von Gasen, die anschließend durch geöffnete Auslassventile ausgestoßen würden, kann auf diese Weise vermieden werden.

Zur Erzielung eines möglichst großen Antriebskomfort für ein von einer solchen Brennkraftmaschine angetriebenes Kraftfahrzeug sollte ein Umschalten zwischen den Betriebsarten (Vollbetrieb und Teilbetrieb) möglichst momentenneutral und dadurch ohne Antriebsruckeln realisiert werden. Hierzu ist es erforderlich, die bei der Umschaltung abnehmende Last, mit der die zu deaktivierenden Zylinder betrieben werden, in möglichst optimal abgestimmter Weise durch eine zunehmende Belastung, mit der die weiterhin aktiv zu betreibenden Zylinder betrieben werden, zu kompensieren.

Aus der DE 10 2011 086 344 A1 ist eine Brennkraftmaschine mit einem zwei Zylinderbänke aufweisenden Verbrennungsmotor bekannt, bei dem für einen Teilbetrieb eine der Zylinderbänke deaktiviert werden kann. Dabei ist vorgesehen, die Zylinder der zu deaktivierenden Zylinderbank nacheinander zu deaktivieren, um ein möglichst momentenneutrales Umschalten von einem Vollbetrieb, bei dem beide Zylinderbänke in aktiviertem Zustand sind, zu dem Teilbetrieb zu erreichen.

Auch die DE 10 2012 017 275 A1 beschreibt eine Hubkolben-Brennkraftmaschine mit mehreren Zylindern, von denen einzelne im Rahmen eines Teilbetriebs deaktiviert werden können. Um eine möglichst momentenneutrale Umschaltung von einem Vollbetrieb auf einen Teilbetrieb zu realisieren ist vorgesehen, für die Umschaltung während einer über mehrere Takte ablaufenden Drosselung der zu deaktivierenden Zylinder einen schaltbaren, insbesondere elektromotorisch angetriebenen Verdichter kurzzeitig zu aktivieren, um die Füllung der weiter aktiv zu betreibenden Zylinder zu erhöhen.

Die US 2016/032846 A1 offenbart eine Brennkraftmaschine, die in einem Vollbetrieb, in einem ersten Teilbetrieb und in einem zweiten Teilbetrieb betrieben werden kann, wobei in dem ersten Teilbetrieb und in dem zweiten Teilbetrieb zumindest ein Brennraum der Brennkraftmaschine deaktiviert ist. Ein Vollbetrieb der Brennkraftmaschine ist dabei insbesondere bei besonders hohen Lasten im Betrieb der Brennkraftmaschine vorgesehen. Reduzieren sich diese Lasten auf mittlere Werte, wird in den ersten Teilbetrieb gewechselt. Reduzieren sich die Lasten dagegen bis auf relativ niedrige Werte, wird in den zweiten Teilbetrieb gewechselt. Der erste Teilbetrieb und der zweite Teilbetrieb unterscheiden sich dahingehend, dass die Einlassventile der weiterhin aktiven Brennräume mittels unterschiedlicher Nocken betätigt werden, wobei für die Einlassventile der weiterhin aktiven Brennräume in dem ersten Teilbetrieb jeweils eine längere Öffnungsdauer und ein größerer Ventilhub, d.h. eine insgesamt größere Ventilöffnung, realisiert wird als dies in dem zweiten Teilbetrieb der Fall ist. In dem Vollbetrieb ist vorgesehen, die Einlassventile mit denselben Nocken zu betätigen, die auch für den ersten Teilbetrieb vorgesehen sind. Demnach werden die Einlassventile auch während des Vollbetriebs mit einer relativ langen Öffnungsdauer und einem relativ großen Ventilhub geöffnet.

Die US 2009/0007866 A1 beschreibt eine Brennkraftmaschine, die in einem Vollbetrieb und einem Teilbetrieb betreibbar ist, wobei bei einem Umschalten von einem Vollbetrieb zu einem Teilbetrieb vorgesehen ist, den Ventilhub, mit dem die Einlassventile der während des Teilbetriebs weiterhin betätigten Einlassventile geöffnet werden, zu erhöhen, um ein möglichst momentenneutrales Umschalten zu realisieren. Hierzu ist ein Ventiltrieb der Brennkraftmaschine hinsichtlich des Ventilhubs dieser Einlassventile mit einer Vollvariabilität ausgestaltet, d.h. der Ventilhub ist beliebig zwischen einem Minimalwert und einem Maximalwert einstellbar. Im Betrieb der Brennkraftmaschine ist zudem vorgesehen, den Ventilhub der Einlassventile innerhalb der einzelnen Betriebsarten, d.h. innerhalb eines ersten Vollbetriebsbereichs (mit geringen Lasten und Betriebsdrehzahlen), innerhalb eines Teilbetriebsbereichs (mit mittleren Lasten) und innerhalb eines zweiten Vollbetriebsbereichs (mit hohen Lasten und Betriebsdrehzahlen) lastabhängig zu variieren.

Ein Verfahren, wie es in dem Oberbegriff des Patentanspruchs 1 definiert ist, ist in der US 2015/0152756 A1 offenbart.

Der Erfindung lag die Aufgabe zugrunde, bei einer Brennkraftmaschine auf vorteilhafte Weise ein möglichst momentenneutrales Umschalten von einem Vollbetrieb auf einen Teilbetrieb zu realisieren.

Diese Aufgabe wird mittels eines Verfahrens gemäß dem Patentanspruch 1 gelöst. Eine zur Durchführung eines solchen Verfahrens geeignete Brennkraftmaschine ist Gegenstand des Patentanspruchs 6. Vorteilhafte Ausführungsformen des erfindungsgemäßen Verfahrens und bevorzugte Ausgestaltungen der erfindungsgemäßen Brennkraftmaschine sind Gegenstände der weiteren Patentansprüche und ergeben sich aus der nachfolgenden Beschreibung der Erfindung.

Der Erfindung liegt der Gedanke zugrunde, ein möglichst momentenneutrales Umschalten von einem Vollbetrieb in einen Teilbetrieb einer Brennkraftmaschine mit einem mehrzylindrigen Verbrennungsmotor zu realisieren, indem der durch die Deaktivierung des oder der hierfür vorgesehenen Zylinder wegfallende Drehmomentanteil durch den oder die weiterhin aktiv zu betreibenden Zylinder zumindest auch dadurch kompensiert wird, dass bei der Umschaltung der Liefergrad, d.h. das Verhältnis der nach Abschluss eines Ladungswechsels tatsächlich im Zylinder enthaltenen Masse an Frischgas zu der theoretisch maximal möglichen Masse, für diese Zylinder erhöht und insbesondere so weit wie möglich maximal eingestellt wird. Dadurch kann unabhängig von einer Saugrohrdruckerhöhung die Menge des in den Brennräumen der weiterhin aktiv betriebenen Zylinder umsetzbaren Kraftstoffs und damit das von diesen erzeugte Antriebsmoment erhöht werden. Besonders vorteilhaft an einer Erhöhung des Liefergrads ist, dass dies, insbesondere im Vergleich zu einer Erhöhung des Saugrohrdrucks (insbesondere bei der Verwendung eines relativ kostengünstigen Abgasturboladers) vergleichsweise schnell realisierbar ist, indem die Steuerzeiten der Einlassventile der weiterhin aktiv zu betreibenden Zylinder verstellt werden. Eine besonders schnelle Verstellung der Steuerzeiten kann dabei durch einen Wechsel der diese Einlassventile betätigenden Nocken mittels einer entsprechenden Umschaltvorrichtung, wie sie insbesondere auch für die Deaktivierung der Gaswechselventile der zu deaktivierenden Zylinder vorgesehen sein kann, erfolgen.

Dementsprechend ist ein Verfahren zum Betreiben einer Brennkraftmaschine vorgesehen, wobei die Brennkraftmaschine zumindest einen Verbrennungsmotor umfasst, der mindestens zwei Brennräume ausbildet, die von in einem Zylindergehäuse ausgebildeten Zylindern und darin zyklisch auf und ab geführten Kolben begrenzt werden und in denen im Betrieb der Brennkraftmaschine thermodynamische Kreisprozesse durchführbar sind, wobei dann ein Gaswechsel in den Brennräumen mittels jeweils mindestens eines Einlassventils und Auslassventils, die mittels Nocken betätigt werden, gesteuert wird und wobei
- ein erster Betriebszustand vorgesehen ist, in dem sowohl in einem ersten der Brennräume als auch in einem zweiten der Brennräume die thermodynamischen Kreisprozesse durchgeführt werden (Vollbetrieb) und
- ein zweiter Betriebszustand vorgesehen ist, in dem in dem ersten Brennraum die thermodynamischen Kreisprozesse durchgeführt werden und in dem zweiten Brennraum die thermodynamischen Kreisprozesse nicht durchgeführt werden (Teilbetrieb), indem zumindest eine Zufuhr von Kraftstoff in den zweiten Brennraum unterbunden und/oder eine Zündung von Kraftstoff verhindert wird und zudem vorzugsweise die dem zweiten Brennraum zugeordneten Einlass- und Auslassventile nicht betätigt und somit geschlossen gehalten werden.

Für ein Umschalten von dem ersten Betriebszustand in den zweiten Betriebszustand wird von einer Verwendung eines ersten Einlassnockens zu der Verwendung eines zweiten Einlassnockens für die Betätigung des dem ersten Brennraum zugeordneten Einlassventils gewechselt.

Um in vorteilhafter Weise durch einen Wechsel der Einlassnocken für das dem auch in dem zweiten Betriebszustand aktiv genutzten ersten Brennraum zugeordnete Einlassventil eine Erhöhung des Liefergrads realisieren zu können, sollte vorzugsweise vorgesehen sein, dass der Liefergrad für diesen Brennraum (und vorzugsweise auch für den zweiten Brennraum) im ersten Betriebszustand nicht größtmöglich ist, indem für das/die diesem oder diesen Brennräumen zugeordnete(n) Einlassventil(e) ein relativ frühes oder ein relativ spätes Einlassschließen vorgesehen wird. Ein solches Vorgehen kann bei modernen Brennkraftmaschinen regelmäßig vorgesehen sein und ist als Miller- oder Atkinson-Verfahren bekannt. Dieses ermöglicht bei einem Betrieb einer Brennkraftmaschine mit geringen bis mittleren Lasten die Realisierung eines relativ großen Wirkungsgrads infolge einer vergleichsweise stark ausgeprägten Entspannung der relativ geringen Menge des in den Brennräumen eingeschlossenen Gases während des Arbeitstakts. Erfindungsgemäß ist daher weiterhin vorgesehen, dass zumindest das Einlassventil des ersten Zylinders bei einer Betätigung mittels des ersten Einlassnockens vor UT - 60°KW oder nach UT + 100°KW (UT: Unterer Totpunkt der Kolbenbewegung) geschlossen wird. Da ein Umschalten von dem Vollbetrieb in den Teilbetrieb der Brennkraftmaschine häufig nur dann sinnvoll möglich ist, wenn die Brennkraftmaschine zuvor (im Vollbetrieb) im Wesentlichen stationär mit geringen bis mittleren Lasten betrieben worden ist, ist es zur Erzielung eines in diesem (Voll-)Betrieb möglichst guten Wirkungsgrad auch sinnvoll, diesen entsprechend eines Miller-Verfahrens zu betreiben. Nach einem Umschalten in den Teilbetrieb soll dagegen erfindungsgemäß der Liefergrad in dem weiterhin aktiv betriebenen ersten Brennraum im Vergleich zu dem Vollbetrieb erhöht sein, um den Wegfall der Antriebsleistung des Brennraums zumindest teilweise zu kompensieren. Insbesondere kann dafür vorgesehen sein, einen möglichst großen Liefergrad zu realisieren, wobei gegebenenfalls Beschränkungen, wie beispielsweise eine Vermeidung von Klopfen, berücksichtigt werden sollten. Hierzu ist im Rahmen des erfindungsgemäßen Verfahrens vorgesehen, dass zumindest das Einlassventil des ersten Zylinders im Teilbetrieb der Brennkraftmaschine und demnach bei einer Betätigung mittels des zweiten Einlassnockens in dem Bereich zwischen UT - 50°KW und UT + 50°KW, vorzugsweise zwischen UT - 20°KW und UT + 30°KW geschlossen wird.

Zur Realisierung eines möglichst vorteilhaften Teilbetriebs der Brennkraftmaschine ist gemäß dem erfindungsgemäßen Verfahren weiterhin vorgesehen, dass für ein Umschalten von dem ersten Betriebszustand in den zweiten Betriebszustand eine Ventilüberschneidung, d.h. ein zeitgleiches Öffnen der dem ersten Brennraum zugeordneten Einlass- und Auslassventile, angepasst wird. Dies kann insbesondere dadurch erreicht werden, dass zumindest das Auslassschließen oder die Auslasssteuerzeiten insgesamt (d.h. zusätzlich auch das Auslassöffnen) für das entsprechende Auslassventil nach früh, beispielsweise um zwischen 0°KW und 20°KW), verstellt werden.

Ein solches Verstellen der Auslasssteuerzeiten könnte mittels eines Phasenstellers erfolgen, durch den eine Phasenlage des oder der Auslassnocken, gegebenenfalls einer den oder die Auslassnocken integrierenden Nockenwelle insgesamt, gegenüber einem eine Drehung des oder der Auslassnocken bewirkenden Antriebsrad verdreht werden kann. Da solche Phasensteller in der Regel jedoch relativ träge arbeiten, ist gemäß dem erfindungsgemäßen Verfahren vorgesehen, dass von einer Verwendung eines ersten Auslassnockens zu der Verwendung eines zweiten Auslassnockens für die Betätigung des dem ersten Brennraum zugeordneten Auslassventils gewechselt wird, um ein entsprechendes Verstellen der Auslasssteuerzeiten zu realisieren. Dabei ist vorgesehen , dass der zweite Auslassnocken im Vergleich zu dem ersten Auslassnocken ein relativ frühes Auslassschließen bewirkt.

Eine erfindungsgemäße Brennkraftmaschine, die zumindest einen Verbrennungsmotor umfasst, der mindestens zwei Brennräume ausbildet, die von in einem Zylindergehäuse ausgebildeten Zylindern und darin zyklisch auf und ab geführten Kolben begrenzt werden und in denen im Betrieb der Brennkraftmaschine thermodynamische Kreisprozesse durchführbar sind, wobei ein Gaswechsel in den Brennräumen mittels jeweils eines Einlassventils und eines Auslassventils, die mittels Nocken betätigt werden, steuerbar ist und wobei für das einem ersten Brennraum zugeordnete Einlassventil zwei Einlassnocken und für das dem ersten Brennraum zugeordnete Auslassventil zwei Auslassnocken vorgesehen sind, zwischen deren Nutzung mittels einer Umschaltvorrichtung umgeschaltet werden kann, ist durch eine Steuerungsvorrichtung gekennzeichnet, die derart programmiert ist, dass diese ein erfindungsgemäßes Verfahren ausführen kann.

Eine für ein Umschalten von einem Vollbetrieb in einen Teilbetrieb einer Brennkraftmaschine erfindungsgemäß vorgesehene Erhöhung des Liefergrads für die weiterhin aktiv betriebenen Zylinder ist grundsätzlich unabhängig von einer möglichen Einstellbarkeit des Drucks in einem Saugrohr der Brennkraftmaschine, wie dies beispielsweise durch eine Aufladung erreicht werden kann, anwendbar. Bei der erfindungsgemäßen Brennkraftmaschine kann es sich daher grundsätzlich auch um eine nicht-aufgeladene Brennkraftmaschine, d.h. eine, bei der der Verbrennungsmotor als Saugmotor ausgebildet ist, handeln. Vorzugsweise kann jedoch vorgesehen sein, dass nach dem Umschalten von dem ersten Betriebszustand in den zweiten Betriebszustand der Druck in einem Saugrohr der Brennkraftmaschine erhöht wird, so dass eine Kompensation des weggefallenen Anteils der Antriebsleistung infolge der Deaktivierung eines oder mehrerer Zylinder im Teilbetrieb nicht lediglich durch eine Erhöhung des Liefergrads für den oder die weiterhin aktiv zu betreibenden Zylinder, sondern auch durch eine Erhöhung der Zylinderfüllung in Folge eines erhöhten Saugrohrdrucks und damit durch die Möglichkeit einer Umsetzung einer größeren Menge von Kraftstoff realisiert wird.

Eine erfindungsgemäße Brennkraftmaschine kann demnach Mittel zur Erhöhung des Drucks in einem Saugrohr der Brennkraftmaschine aufweisen. Bei diesen Mitteln kann es sich insbesondere um einen in einen Frischgasstrang der Brennkraftmaschine integrierten Verdichter handeln. Besonders bevorzugt kann der Verdichter Teil eines Abgasturboladers sein, der weiterhin noch eine in einen Abgasstrang der Brennkraftmaschine integrierte Turbine aufweist, durch die der Verdichter antreibbar ist. Ein solcher Abgasturbolader kann auch mit einer Vorrichtung zur variablen Turbinenanströmung (VTG) versehen sein, durch die eine relativ schnelle und wirkungsvolle Beeinflussung des Drucks in dem Saugrohr der Brennkraftmaschine ermöglicht wird.

Als "Saugrohr" wird der letzte Abschnitt des Frischgasstrangs der Brennkraftmaschine verstanden, in dem die Frischgasströmung auf Teilströmungen, die den einzelnen Brennräumen des Verbrennungsmotors zugeführt werden, aufgeteilt wird, wozu das Saugrohr eine der Anzahl an Brennräumen des Verbrennungsmotors entsprechende Anzahl an Gasführungskanälen ausbildet.

Eine Vorrichtung zur variablen Turbinenanströmung (VTG) kann in bekannter Weise eine Mehrzahl von in einem Einlass einer Turbine des Abgasturboladers angeordnete Leitschaufeln umfassen, die individuell drehbar ausgebildet sind, wobei diese gemeinsam mittels einer Verstellvorrichtung verstellbar sind. In Abhängigkeit von den Drehstellungen der Leitschaufeln verengen diese den freien Strömungsquerschnitt in dem Einlass der Turbine mehr oder weniger und beeinflussen zudem den Abschnitt der primären Anströmung des Turbinenlaufrads und die Ausrichtung dieser Anströmung.

Eine Beeinflussung des Drucks in dem Saugrohr der Brennkraftmaschine wird bis zum Erreichen eines für den Teilbetrieb vorgesehenen Zielwerts, ausgehend von einem für den Vollbetrieb vorgesehenen Ausgangswert, in der Regel eine relativ lange Zeitdauer benötigen, die insbesondere auch deutlich länger als die Zeitdauer sein kann, die für ein Umschalten von dem ersten Einlassnocken auf den zweiten Einlassnocken für das dem ersten Brennraum zugeordnete Einlassventil erforderlich ist. Insbesondere dann, d.h. wenn eine Beeinflussung des Drucks in dem Saugrohr vorgesehen ist, kann daher weiterhin bevorzugt vorgesehen sein, dass nach dem Umschalten von dem ersten Betriebszustand in den zweiten Betriebszustand die Steuerzeiten für das dem ersten Brennraum zugeordnete Einlassventil, insbesondere mittels eines Phasenstellers,
- in Richtung früh verstellt werden, wenn für den ersten Betriebszustand ein Einlassschließen vor UT vorgesehen war oder
- in Richtung spät verstellt werden, wenn für den ersten Betriebszustand ein Einlassschließen nach UT vorgesehen war.

Eine erfindungsgemäße Brennkraftmaschine kann hierfür insbesondere einen Phasensteller zur Änderung der Steuerzeiten für das dem ersten Brennraum und/oder dem zweiten Brennraum zugeordnete Einlassventil aufweisen. Dies ermöglicht in vorteilhafter Weise eine besonders gute momentenneutrale Umschaltung von dem Vollbetrieb in den Teilbetrieb, indem mittels der erfindungsgemäßen Erhöhung des Liefergrads für die oder den weiterhin aktiv zu betreibenden Zylinder auch das nur relativ langsame Zunehmen der Wirkung der Erhöhung des Drucks im Saugrohr kompensiert wird. Somit kann insbesondere vorgesehen sein, dass durch das Umschalten von dem ersten Einlassnocken auf den zweiten Einlassnocken eine Erhöhung des Liefergrads realisiert wird, die größer ist, als dies für einen Betrieb nach einer Anfangsphase, während der die Wirkung einer Erhöhung des Drucks im Saugrohr noch nicht vollständig gegeben ist, vorgesehen ist. Ausgehend von dieser zunächst relativ großen Erhöhung des Liefergrads kann dann durch eine entsprechende Änderung der Steuerzeiten für das dem ersten Brennraum zugeordnete Einlassventil, wodurch der Liefergrad wieder ein Stück weit und gegenläufig zu dem Anstieg des Drucks im Saugrohr reduziert wird, ein im Wesentlichen konstantes Antriebsmoment während der Anfangsphase und darüber hinaus realisiert werden.

Sofern durch das Umschalten von dem ersten Einlassnocken auf den zweiten Einlassnocken für das dem ersten Brennraum zugeordnete Einlassventil eine möglichst weitgehende Erhöhung des Liefergrads realisiert werden soll, kann dies dazu führen, dass sich die Brennprozesse, die im Rahmen des thermodynamischen Kreisprozesses in diesem Brennraum ablaufen, der Klopfgrenze nähern oder dass die Klopfgrenze sogar ohne Gegenmaßnahmen überschritten werden könnte. Um dies zu vermeiden kann in einer bevorzugten Ausführungsform des erfindungsgemäßen Verfahrens vorgesehen sein, dass für das Umschalten von dem ersten Betriebszustand in den zweiten Betriebszustand der Zündwinkel in Richtung spät verstellt wird. Vorzugsweise kann dies gleichzeitig mit dem Umschalten der Einlassnocken erfolgen. Ein solches Vorgehen ist insbesondere bei einem fremdgezündeten Verbrennungsmotor, insbesondere einem Ottomotor, umsetzbar.

Gegenstand der Erfindung ist auch eine Steuerungsvorrichtung mit einem Speicher, wobei in dem Speicher ein Computerprogramm hinterlegt ist, bei dessen Ausführung ein erfindungsgemäßes Verfahren durchführbar ist.

Die Erfindung betrifft zudem ein Computerprogramm mit einem Programmcode zum Ausführen eines erfindungsgemäßen Verfahrens, wenn das Computerprogramm auf einem Computer ausgeführt wird.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:
- Fig. 1:: eine erfindungsgemäße Brennkraftmaschine in einer schematischen Darstellung;
- Fig. 2:: in einem schematischen Längsschnitt den Verbrennungsmotor der Brennkraftmaschine gemäß der Fig. 1;
- Fig. 3:: einen Nockenträger für einen Verbrennungsmotor gemäß der Fig. 1;
- Fig. 4:: ein Nockenpaar des Nockenträgers gemäß der Fig. 3;
- Fig. 5:: einen Abschnitt des Nockenträgers gemäß der Fig. 3 und einen Umschaltaktuator in einer schematischen Darstellung;
- Fig. 6:: verschiedene Hubverläufe für die Gaswechselventile eines Verbrennungsmotors gemäß der Fig. 2; und
- Fig. 7:: in einem Diagramm die quantitativen Verläufe verschiedener Betriebsparameter einer Brennkraftmaschine gemäß der Fig. 1 vor und nach einem Umschalten von einem Vollbetrieb in einen Teilbetrieb..

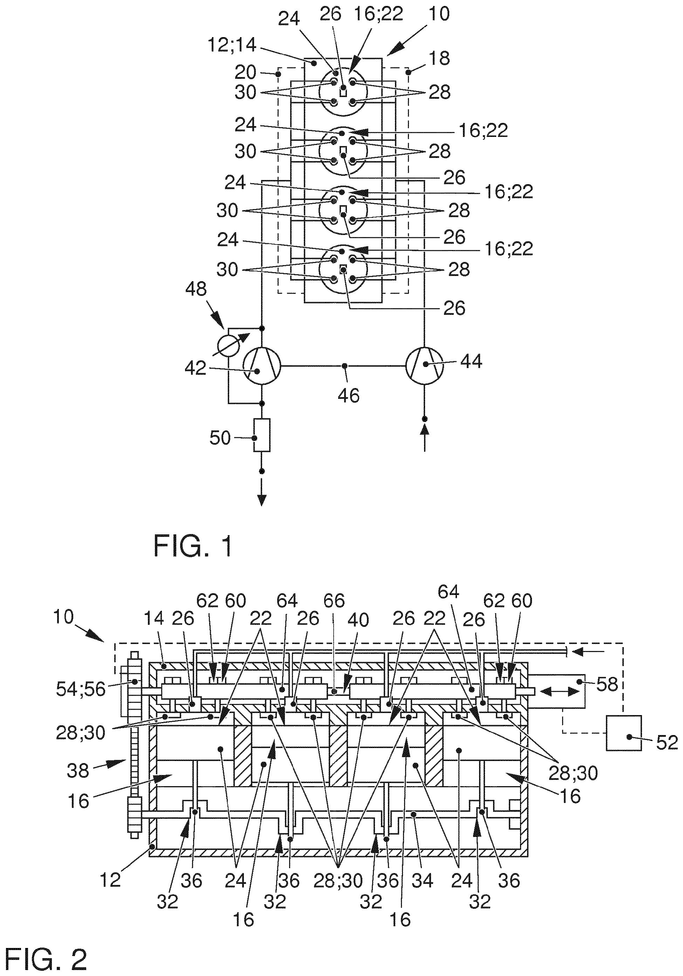

In der Fig. 1 ist schematisch eine erfindungsgemäße Brennkraftmaschine dargestellt. Mittels der Brennkraftmaschine kann beispielsweise ein Kraftfahrzeug (nicht dargestellt) angetrieben werden.

Die Brennkraftmaschine umfasst einen in weiteren Details auch in der Fig. 2 dargestellten Verbrennungsmotor 10, der insbesondere nach dem Otto-Prinzip betreibbar ist. Der Verbrennungsmotor 10 bildet in einem Verbund aus Zylinderkurbelgehäuse 12 und Zylinderkopf 14 mehrere (hier: vier) Zylinder 16 aus. Die Zylinder 16 sind einlassseitig mit einem Saugrohr 18 eines Frischgasstrangs und auslassseitig mit einem Abgaskrümmer 20 eines Abgasstrangs der Brennkraftmaschine gasführend verbunden. In bekannter Weise wird in Brennräumen 22, die von den Zylindern 16 zusammen mit darin geführten Kolben 24 sowie dem Zylinderkopf 14 begrenzt sind, Frischgas (im Wesentlichen Luft) mit Kraftstoff verbrannt. Der Kraftstoff kann dazu mittels Injektoren 26 direkt in die Brennräume 22 eingespritzt werden. Das bei der Verbrennung des Kraftstoff-Frischgas-Gemisches entstehende Abgas wird über den Abgasstrang abgeführt.

Die Zufuhr des Frischgases in die Brennräume 22 und die Abfuhr des Abgases aus den Brennräumen 22 wird über vier Gaswechselventile, nämlich zwei Einlassventile 28 und zwei Auslassventile 30, je Zylinder 16 gesteuert, die von einem in der Fig. 1 nicht dargestellten Ventiltrieb des Verbrennungsmotors 10 betätigt werden. Der Ventiltrieb umfasst gemäß der Fig. 2 eine Kurbelzapfen 32 ausbildende Kurbelwelle 34, wobei die Kurbelzapfen 32 mit den Kolben 24 über Pleuel 36 verbunden sind. Dadurch werden Linearbewegungen der Kolben 24 in eine Rotation der Kurbelwelle 34 übersetzt, wobei die Rotation der Kurbelwelle 34 wiederum einen periodischen Richtungswechsel der Linearbewegungen der Kolben 24 bewirkt. Die Rotation der Kurbelwelle 34 wird zudem über ein Steuergetriebe, beispielsweise ein Zahnriemengetriebe 38, auf zwei Nockenwellen 40 übertragen, von denen jede über beispielsweise Kipp- oder Schlepphebel (nicht dargestellt) zwei Gaswechselventile 28, 30 je Brennraum 22 betätigt. Von den Nockenwellen 40 ist eine als Einlassnockenwelle ausgebildet, d.h. diese betätigt alle Einlassventile 28, während die andere als Auslassnockenwelle ausgebildet ist und folglich alle Auslassventile 30 betätigt.

Die Brennkraftmaschine umfasst weiterhin einen Abgasturbolader. Dieser weist eine in den Abgasstrang integrierte Turbine 42 sowie einen in den Frischgasstrang integrierten Verdichter 44 auf. Ein von dem Abgasstrom rotierend angetriebenes Laufrad der Turbine 42 treibt über eine Welle 46 ein Laufrad des Verdichters 44 an. Die so bewirkte Rotation des Laufrads des Verdichters 44 verdichtet das durch diesen hindurch geführte Frischgas. Mittels eines Wastegates 48 kann eine Ladedruckbegrenzung erzielt werden, indem in einem Betrieb des Verbrennungsmotors 10 mit hohen Drehzahlen und/oder Lasten ein Teil des Abgasstroms an der Turbine 42 vorbei geführt wird. Weiterhin ist eine Abgasnachbehandlungsvorrichtung 50, beispielsweise in Form eines Dreiwegekatalysators, in den Abgasstrang integriert.

Der Verbrennungsmotor 10 umfasst weiterhin jeweils einen von einer Steuerungsvorrichtung 52 (Motorsteuerung) angesteuerten Phasensteller 54 für die Nockenwellen 40. Durch die Phasensteller 54 wird ermöglicht, die Steuerzeiten und damit die Öffnungsphasen der dazugehörigen Gaswechselventile 28, 30 zu verändern beziehungsweise zu verschieben. die Phasensteller 54 sind in bekannter Weise (vgl. beispielsweise DE 10 2013 223 112 A1) in jeweils ein Getrieberad 56 der Nockenwellen 40 integriert. Dementsprechend können die Phasensteller 54 der Nockenwellen 40 jeweils einen drehfest mit der jeweiligen Nockenwelle 40 verbundenen Flügelrotor (nicht dargestellt) aufweisen, der jeweils in Grenzen drehbar innerhalb eines Stators (nicht dargestellt) des Phasenstellers 54 angeordnet ist. Der Stator bildet auf seiner im Wesentlichen zylindrischen Außenfläche eine Zahnkontur für den Eingriff von Zähnen eines Zahnriemens des Zahnriemengetriebes 38 aus. Zwischen dem Flügelrotor und dem Stator der Phasensteller 54 können mehrere Druckkammern ausgebildet sein, die, gesteuert durch ein Phasenstellerventil (nicht dargestellt), gezielt mit einer Flüssigkeit, insbesondere einem Öl, befüllt werden können, um den Flügelrotor innerhalb des Stators definiert zu verdrehen, wodurch, dem Ziel einer Veränderung der Öffnungsphase der dazugehörigen Gaswechselventile 28, 30 entsprechend, der Phasenwinkel zwischen der jeweiligen mit dem Flügelrotor verbundenen Nockenwelle 40 und dem mit der Kurbelwelle 32 drehantreibend verbundenen Stator verändert wird.

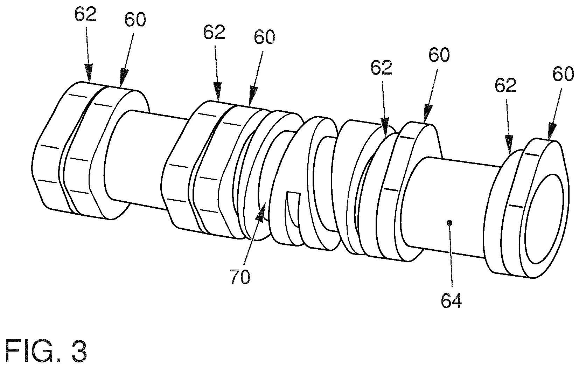

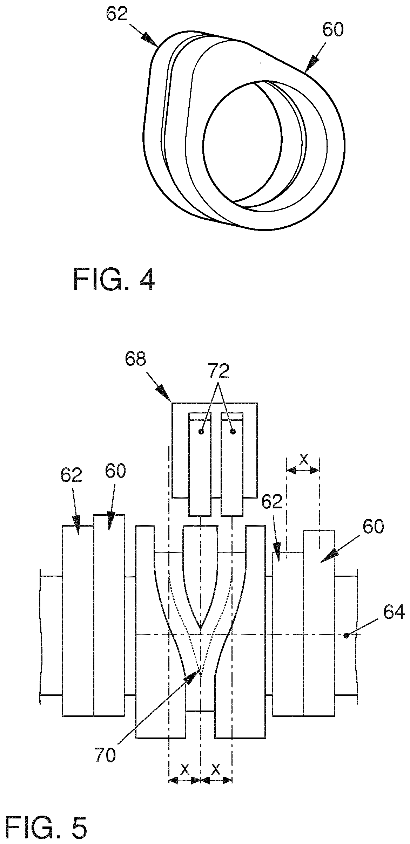

Die Brennkraftmaschine umfasst weiterhin noch eine Umschaltvorrichtung 58, mittels der sowohl für die Einlassventile 28 als auch die Auslassventile 30 von einer Betätigung mittels eines ersten Nockens 60 zu einer Betätigung mittels eines zweiten Nockens 62 umgeschaltet werden kann. Diese Umschaltvorrichtung 58 ist ebenfalls von der Steuerungsvorrichtung 52 ansteuerbar und in der Fig. 2 nur schematisch angedeutet. Die Funktion der Umschaltvorrichtung 58 beruht auf einer längsaxialen Verschiebbarkeit von hülsenförmigen Nockenträgern 64 (vgl. auch Fig. 3), die drehfest auf einer Grundwelle 66 angeordnet sind, mittels jeweils eines Umschaltaktuators 68 (vgl. Fig. 4), wobei die Nockenträger 64 für jedes der von diesen betätigbaren Einlassventile 28 und Auslassventile 30 zwei unterschiedliche Nocken 60, 62 aufweisen (vgl. Fig. 3 und 4), die in Abhängigkeit von den eingestellten Verschiebestellungen der Nockenträger 64 alternativ mit den dazugehörigen Einlassventilen 28 und Auslassventilen 30 zusammenwirken.

In dem Ausgestaltungsbeispiel, wie es in den Fig. 2 und 3 dargestellt ist, umfasst jeder der Nockenträger 40 insgesamt vier Nockenpaare, die jeweils einem Gaswechselventil 28, 30 der Brennkraftmaschine zugeordnet sind. Mittels der Nocken 60, 62, die von einem derartigen Nockenträger 64 ausgebildet sind, werden somit entweder die Einlassventile 28 oder die Auslassventile 30 von insgesamt zwei benachbarten Zylindern 16 eines Verbrennungsmotors 10 gemäß den Fig. 1 und 2, bei dem jedem Zylinder 16 zwei Einlassventile 28 und zwei Auslassventile 30 zugeordnet sind, betätigt. Zwischen den beiden den Gaswechselventilen 28, 30 eines ersten Zylinders 16 zugeordneten Nockenpaaren und den beiden den Gaswechselventilen 28 ,30 eines zweiten Zylinders 16 zugeordneten Nockenpaaren bildet der in der Fig. 3 dargestellte Nockenträger 64 weiterhin noch eine Schaltkulisse in Form einer Y-förmigen Führungsnut 70 aus. Durch ein Zusammenwirken dieser Führungsnut 70 mit Mitnehmern 72 des zugehörigen Umschaltaktuators 68 kann der Nockenträger 64 axial um die Distanz x verschoben und dadurch jeweils ein ausgewählter Nocken 60, 62 jedes Nockenpaars mit dem dazugehörigen Gaswechselventil 28, 30 in Wirkverbindung gebracht werden. Gemäß der Fig. 5 kann hierzu beispielsweise ausgehend von der dargestellten Funktionsstellung, in der die Gaswechselventile 28, 30 jeweils mit dem rechten (ersten) Nocken 60 jedes Nockenpaars in Wirkverbindung stehen, der rechte Mitnehmer 72 ausgefahren und der Nockenträger 64 dadurch, im Zusammenwirken mit seiner Rotation (in der Fig. 5 nach oben) um die Distanz x nach rechts verschoben werden. Infolge des Auslaufens der Y-förmigen Führungsnut 70 in dem mittleren, in der Fig. 5 unteren Abschnitt wird der rechte Mitnehmer 72 dabei wieder in die eingefahrene Stellung zurück bewegt. Nach einem solchen Verschieben des Nockenträgers 64 um die Distanz x befinden sich dann jeweils die linken (zweiten) Nocken 62 jedes Nockenpaars in Wirkverbindung mit dem dazugehörigen Gaswechselventil 28, 30. Ein solches Verschieben des Nockenträgers 64 um die Distanz x nach rechts führt weiterhin dazu, dass der linke Mitnehmer 72 In Überdeckung mit dem linken Abschnitt der Y-förmigen Führungsnut 70 gebracht wurde, so dass durch ein Ausfahren dieses Mitnehmers 72 der Nockenträger 64 wieder um die Distanz x nach links verschoben werden kann.

Erfindungsgemäß ist vorgesehen, dass für einen sogenannten Teilbetrieb der Brennkraftmaschine eine Teilmenge und insbesondere die Hälfte der Brennräume 22, konkret die beiden mittigen Brennräume, deaktiviert werden können, indem eine Zufuhr von Kraftstoff zu den dazugehörigen Injektoren 26 unterbrochen und die diesen zugeordneten Gaswechselventile 28, 30 nicht mehr betätigt, d.h. geöffnet werden. Hierzu ist vorgesehen, dass jedes Nockenpaar, das den Gaswechselventilen 28, 30 eines solchen deaktivierbaren Brennraums 22 zugeordnet ist, einen zweiten Nocken 62 in Form eines sogenannten Nullnockens ausbildet, der keine Nockenerhebung aufweist und damit nicht zu einem Öffnen eines diesem zugeordneten Gaswechselventils 28, 30 führt. Bei dem Nockenträger 64 gemäß der Fig. 3 sind jeweils die linken Nocken der beiden rechts von der Führungsnut 70 angeordneten Nockenpaare als entsprechende Nullnocken ausgebildet.

Bei einer Umschaltung von einem Vollbetrieb der Brennkraftmaschine, in dem sämtliche der Zylinder 16 mit niedrigen bis mittleren Lasten betrieben werden, in einen solchen Teilbetrieb werden in einem sehr kurzen Zeitraum, der in etwa einer Umdrehung der Kurbelwelle 32 entspricht, die Hälfte der Zylinder 16 deaktiviert, die somit nicht mehr zur Erzeugung einer Antriebsleistung durch den Verbrennungsmotor 10 beitragen können. Im Gegenteil, da die diesen Zylindern 16 zugeordneten Kolben 24 von den weiterhin aktiv betriebenen Zylindern 16 mitgeschleppt werden müssen, ändern diese deaktivierten Zylinder 16 ihre Funktion von einem Leistungserzeuger zu einem Leistungsverbraucher.

Da ein solches Umschalten von dem Vollbetrieb in den Teilbetrieb regelmäßig in einer konstanten Betriebsphase der Brennkraftmaschine erfolgen soll, soll folglich dann auch die Antriebsleistung vor und nach der Umschaltung im Wesentlichen konstant bleiben. Daher muss das Ausfallen der deaktivierten Zylinder 16 als Leistungserzeuger von den weiterhin aktiv betriebenen Zylindern 16 kompensiert werden. Die Last, mit der diese nach einem Umschalten betrieben werden, muss dazu erheblich erhöht und insbesondere in etwa verdoppelt werden. Hierzu muss innerhalb eines Zyklus der in den weiterhin aktiv betriebenen Zylindern 16 durchgeführten thermodynamischen Kreisprozesse eine deutlich größere Menge an Kraftstoff umgesetzt werden, wozu eine in etwa entsprechend gesteigerte Menge von Frischgas erforderlich ist.

Diese erhöhte Menge an Frischgas soll einerseits durch eine Erhöhung des Drucks im Saugrohr 18 mittels üblicher Maßnahmen der Ladedruckregelung des Abgasturboladers erreicht werden. Durch eine höhere Verdichtung des Frischgases kann dann mehr Frischgas in die Brennräume 22 eingebracht werden, so dass auch eine entsprechend erhöhte Menge an Kraftstoff umsetzbar ist.

Weiterhin ist vorgesehen, dass auch der Liefergrad und damit das Verhältnis der nach Abschluss eines Ladungswechsels tatsächlich in den Zylindern 16 enthaltenen Massen an Frischgas zu den theoretisch maximal möglichen Massen erhöht und insbesondere maximiert werden. Beide Maßnahmen in Kombination führen zu einer deutlichen Erhöhung der den weiterhin aktiv betriebenen Zylindern 16 innerhalb eines Zyklus zugeführten Menge an Frischgas im Teilbetrieb im Vergleich zu dem dem Umschalten vorausgegangenen Vollbetrieb.

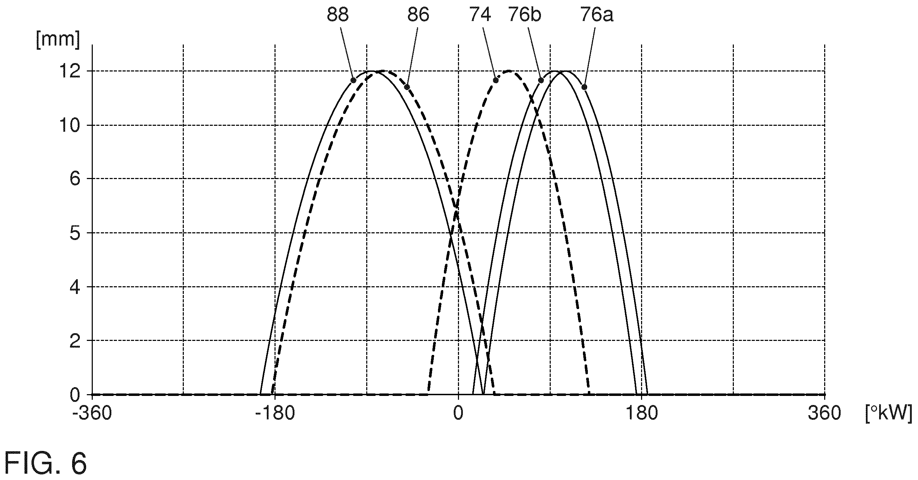

Die Wirkung der Liefergraderhöhung ist insbesondere auch deshalb relativ stark ausgeprägt, weil für die Brennkraftmaschine vorgesehen ist, dass diese in einem Vollbetrieb, der einem Umschalten in den Teilbetrieb vorausgeht, in einem sogenannten Miller-Zyklus betrieben wird, bei dem gemäß dem vorliegenden Ausgestaltungsbeispiel vorgesehen ist, die Einlassventile 28 relativ früh und demnach deutlich (beispielsweise ca. 50°) vor UT zu schließen, wodurch sich eine nicht vollständige Füllung der Brennräume ergibt. Dies ist in der Fig. 6 anhand des für alle Einlassventile 28 im Vollbetrieb der Brennkraftmaschine vorgesehenen Hubverlaufs 74 gezeigt. Nach einem Umschalten in den Teilbetrieb, wofür nicht nur die den Gaswechselventilen 28, 30 der zu deaktivierenden Zylinder 16 zugeordneten Nocken 60, 62 (jeweils hin zu einem Nullnocken) sondern auch (zumindest teilweise) die den Gaswechselventilen 28, 30 der weiterhin aktiv zu betreibenden Zylinder 16 zugeordneten Nocken 60, 62 gewechselt werden, schließen die Einlassventile 28 dieser weiterhin aktiv zu betreibenden Zylinder 16 dann nicht mehr relativ früh sondern hinsichtlich einer Maximierung des Liefergrads in der Nähe von und konkret einige Grad nach UT, wie dies anhand des in der Fig. 6 dargestellten Hubverlaufs 76a verdeutlicht ist.

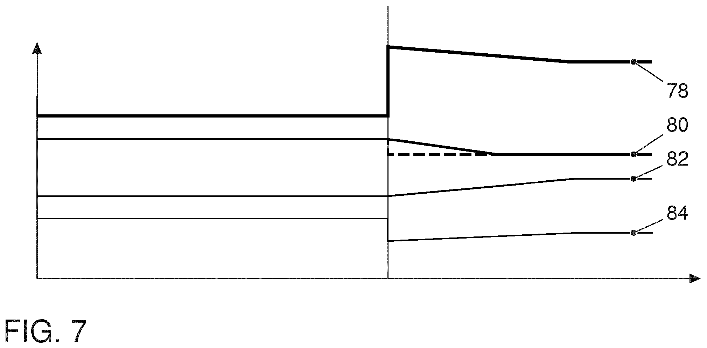

In der Fig. 7 sind zusammenfassend diejenigen Maßnahmen aufgezeigt, die erfindungsgemäß vorgesehen sind, um ein Umschalten der Brennkraftmaschine von einem Vollbetrieb in einen Teilbetrieb möglichst momentenneutral und folglich ohne spürbare kurzzeitige Verringerung der von der Brennkraftmaschine erzeugten Antriebsleistung zu realisieren.

In dem Diagramm gemäß der Fig. 7 ist qualitativ der Verlauf verschiedener Betriebsparameter der Brennkraftmaschine, konkret der für die Einlassventile 28 derjenigen Zylinder 16, die auch im Teilbetrieb aktiv betrieben werden, vorgesehene Öffnungszeitpunkt (Verlaufslinie 78), der für die Auslassventile 30 derselben Zylinder 16 vorgesehene Schließzeitpunkt (Verlaufslinie 80), der Druck im Saugrohr (Verlaufslinie 82) sowie der Zündwinkel (Verlaufslinie 84), über der Zeit t (Horizontalachse) dargestellt. Die linke Hälfte des durch einen vertikalen Strich geteilten Diagramms zeigt dabei die entsprechenden Betriebsparameter für den Vollbetrieb der Brennkraftmaschine, während die rechte Hälfte den Verlauf der Betriebsparameter während einer Anfangsphase des Teilbetriebs zeigt. Die Lage der vertikalen Linie entspricht somit dem Umschaltzeitpunkt beziehungsweise dem Umschaltvorgang, der relativ schnell, nämlich innerhalb einer Umdrehung der Nockenwellen 40 durchgeführt wird und innerhalb einer Umdrehung der Kurbelwelle 34 wirksam wird.

In demselben kurzen Zeitraum wird auch die Liefergraderhöhung wirksam, die durch das Umschalten zwischen den zwei hinsichtlich der Steuerzeiten versetzten Nocken 60, 62 (vgl. Fig. 5), mittels denen die Einlassventile 28 der weiterhin aktiv zu betreibenden Zylinder 16 betätigbar sind, erreicht wird, während die Wirkung der Erhöhung des Drucks im Saugrohr 18 nur relativ langsam bis zu einem vorgesehenen Maße ansteigt.

Diese verzögerte Wirkung der Erhöhung des Drucks im Saugrohr 18 wird durch die schnell wirksam werdende Liefergraderhöhung kompensiert, indem für die den auch im Teilbetrieb aktiv zu betreibenden Zylindern 16 zugeordneten Einlassventile 28 mittels der dafür vorgesehenen (zweiten) Nocken 62 zunächst ein hinsichtlich eines maximal möglichen Liefergrads vorgesehener Hubverlauf vorgesehen ist. Dieser Hubverlauf wird jedoch im direkten Anschluss an das Umschalten mittels des der Einlassnockenwelle 40 zugeordneten Phasenstellers 54 der Brennkraftmaschine wieder etwas in Richtung früh verschoben. Dies erfolgt solange, bis der Druck im Saugrohr 18 den vorgesehenen Wert erreicht hat (vgl. Hubverlauf 76b in der Fig. 6).

Da der Hubverlauf 76a für die den im Teilbetrieb weiterhin aktiv betriebenen Zylindern 16 zugeordneten Einlassventile 28, der hinsichtlich eines maximalen Liefergrad ausgelegt ist, ohne Gegenmaßnahmen zu einer stark erhöhten Klopfneigung führen würde, ist gemäß der Fig. 7 (vgl. Verlaufslinie 84) zeitgleich mit der Umschaltung auch eine Zurücknahme und demnach Verstellung des Zündwinkels nach früh vorgesehen, um einer solchen Erhöhung der Klopfneigung entgegenzuwirken. Die zunächst relativ stark vorgesehene Zurücknahme des Zündwinkel wird kontinuierlich und gegenläufig wieder teilweise rückgängig gemacht, solange ein Verschieben des Hubverlaufs 76a, 76b der Einlassventile 28 nach früh mittels des Phasenstellers 54 erfolgt.

In der Fig. 7 ist weiterhin dargestellt (vgl. Verlaufslinie 80), dass zeitgleich mit der Umschaltung von dem Vollbetrieb in den Teilbetrieb eine Verstellung des Schließens der den weiterhin aktiv betriebenen Zylindern 16 zugeordneten Auslassventile 30 nach früh erfolgt, wodurch eine möglichst optimale Anpassung der Ventilüberschneidungen der Einlassventile 28 und Auslassventile 30 erreicht werden kann. Die Fig. 6 zeigt hierzu noch den entsprechenden Hubverlauf 86, wie er für die Auslassventile 30 im Vollbetrieb vor der Umschaltung vorgesehen ist, sowie den Hubverlauf 88, wie er nach einer Beendigung der Beeinflussung durch den Phasensteller 54 im Teilbetrieb für die dann noch betätigten Auslassventile 30 vorgesehen ist.

Diese Frühverstellung der Steuerzeiten der Auslassventile 30 der im Teilbetrieb weiterhin aktiv betriebenen Zylinder 16 könnte, wie in der Fig. 7 gezeigt, mittels des Phasenstellers 54 erfolgen. Erfindungsgemäß wird die Frühverstellung der Steuerzeiten der Auslassventile 30 jedoch auch durch ein Umschalten zwischen zwei Nocken 60, 62 mit unterschiedlichen Nockenlaufbahnen für die auch im Teilbetrieb betätigten Auslassventile 30 erreicht, wie dies in der Fig. 7 anhand der gestrichelten Verlaufslinie 80 dargestellt ist.

### Bezugszeichenliste

- 10: Verbrennungsmotor
- 12: Zylinderkurbelgehäuse
- 14: Zylinderkopf
- 16: Zylinder
- 18: Saugrohr
- 20: Abgaskrümmer
- 22: Brennraum
- 24: Kolben
- 26: Injektor
- 28: Gaswechselventil / Einlassventil
- 30: Gaswechselventil / Auslassventil
- 32: Kurbelzapfen
- 34: Kurbelwelle
- 36: Pleuel
- 38: Zahnriemengetriebe
- 40: Nockenwelle
- 42: Turbine
- 44: Verdichter
- 46: Welle
- 48: Wastegate
- 50: Abgasnachbehandlungsvorrichtung
- 52: Steuerungsvorrichtung
- 54: Phasensteller
- 56: Riemenrad
- 58: Umschaltvorrichtung
- 60: erster Nocken
- 62: zweiter Nocken
- 64: Nockenträger
- 66: Grundwelle
- 68: Umschaltaktuator
- 70: Führungsnut
- 72: Mitnehmer
- 74: Hubverlauf der Einlassventile im Vollbetrieb
- 76a: Hubverlauf der im Teilbetrieb betätigten Einlassventile vor einer Phasenverschiebung
- 76b: Hubverlauf der im Teilbetrieb betätigten Einlassventile nach einer Phasenverschiebung
- 78: Verlauf des Öffnungszeitpunkts der im Teilbetrieb betätigten Einlassventile
- 80: Verlauf des Schließzeitpunkts der im Teilbetrieb betätigten Auslassventile
- 82: Verlauf des Drucks im Saugrohr
- 84: Verlauf des Zündwinkels
- 86: Hubverlauf der Auslassventile im Vollbetrieb
- 88: Hubverlauf der im Teilbetrieb betätigten Auslassventile nach einer Phasenverschiebung

## Patentansprüche

1. Verfahren zum Betreiben einer Brennkraftmaschine mit einem Verbrennungsmotor (10), der mindestens zwei Brennräume (22) ausbildet, die von in einem Zylindergehäuse (12) ausgebildeten Zylindern (16) und darin zyklisch auf und ab geführten Kolben (24) begrenzt werden und in denen im Betrieb der Brennkraftmaschine thermodynamische Kreisprozesse durchführbar sind, wobei dann ein Gaswechsel in den Brennräumen (22) mittels jeweils mindestens eines Einlassventils (28) und eines Auslassventils (30), die mittels Nocken (60, 62) betätigt werden, gesteuert wird und wobei
- ein erster Betriebszustand vorgesehen ist, in dem sowohl in einem ersten Brennraum (22) als auch in einem zweiten Brennraum (22) die thermodynamischen Kreisprozesse durchgeführt werden und
- ein zweiter Betriebszustand vorgesehen ist, in dem in dem ersten Brennraum (22) die thermodynamischen Kreisprozesse durchgeführt werden und in dem zweiten Brennraum (22) die thermodynamischen Kreisprozesse nicht durchgeführt werden,
wobei für ein Umschalten von dem ersten Betriebszustand in den zweiten Betriebszustand von einer Verwendung eines ersten Einlassnockens (60) zu der Verwendung eines zweiten Einlassnockens (62) für die Betätigung des dem ersten Brennraum zugeordneten Einlassventils (28) gewechselt wird, **dadurch gekennzeichnet, dass**
- zumindest das dem ersten Brennraum (22) zugeordnete Einlassventil (28) bei einer Betätigung mittels des ersten Einlassnockens (60) vor UT - 60°KW oder nach UT + 100°KW und mittels des zweiten Einlassnockens (62) in dem Bereich zwischen UT - 50°KW und UT + 50°KW geschlossen wird und
- für ein Umschalten von dem ersten Betriebszustand in den zweiten Betriebszustand eine Ventilüberschneidung der dem ersten Brennraum (22) zugeordneten Einlass- und Auslassventile angepasst wird, wobei von einer Verwendung eines ersten Auslassnockens (60) zu der Verwendung eines zweiten Auslassnockens (62) für die Betätigung des dem ersten Brennraum (22) zugeordneten Auslassventils (30) gewechselt wird, wobei der zweite Auslassnocken (62) im Vergleich zu dem ersten Auslassnocken (60) ein relativ frühes Auslassschließen bewirkt.

2. Verfahren gemäß Anspruch 1, **dadurch gekennzeichnet, dass** zumindest das dem ersten Brennraum (22) zugeordnete Einlassventil (28) bei einer Betätigung mittels des zweiten Einlassnockens (62) in dem Bereich zwischen UT - 20'°KW und UT + 30'°KW geschlossen wird.

3. Verfahren gemäß einem der vorhergehenden Ansprüche, **dadurch gekennzeichnet, dass** nach dem Umschalten von dem ersten Betriebszustand in den zweiten Betriebszustand der Druck in einem Saugrohr (18) der Brennkraftmaschine erhöht wird.

4. Verfahren gemäß einem der vorhergehenden Ansprüche, **dadurch gekennzeichnet, dass** für das Umschalten von dem ersten Betriebszustand in den zweiten Betriebszustand ein Zündwinkel für den ersten Brennraum (22) in Richtung spät verstellt wird.

5. Verfahren gemäß einem der vorhergehenden Ansprüche, **dadurch gekennzeichnet, dass** nach dem Umschalten von dem ersten Betriebszustand in den zweiten Betriebszustand die Steuerzeiten für das dem ersten Brennraum (22) zugeordnete Einlassventil (28)
- in Richtung früh verstellt werden, wenn für den ersten Betriebszustand ein Einlassschließen vor UT vorgesehen war oder
- in Richtung spät verstellt werden, wenn für den ersten Betriebszustand ein Einlassschließen nach UT vorgesehen war.

6. Brennkraftmaschine mit einem Verbrennungsmotor (10), der mindestens zwei Brennräume (22) ausbildet, die von in einem Zylindergehäuse (12) ausgebildeten Zylindern (16) und darin zyklisch hin und her geführten Kolben (24) begrenzt werden und in denen im Betrieb der Brennkraftmaschine thermodynamische Kreisprozesse durchführbar sind, wobei ein Gaswechsel in den Brennräumen (22) mittels jeweils eines Einlassventils (28) und eines Auslassventils (30), die mittels Nocken (60, 62) betätigt werden, steuerbar ist und wobei für das einem ersten Brennraum (22) zugeordnete Einlassventil (28) zwei Einlassnocken (60, 62) und für das dem ersten Brennraum (22) zugeordnete Auslassventil (30) zwei Auslassnocken (60, 62) vorgesehen sind, zwischen deren Nutzung mittels einer Umschaltvorrichtung (58) umgeschaltet werden kann, **gekennzeichnet durch** eine Steuerungsvorrichtung (52), die derart programmiert ist, dass diese ein Verfahren gemäß einem der vorhergehenden Ansprüche ausführen kann.

7. Brennkraftmaschine gemäß Anspruch 6, **gekennzeichnet durch** zwei Auslassnocken (60, 62) für das dem zweiten Brennraum (22) zugeordnete Auslassventil (30), zwischen deren Nutzung mittels einer Umschaltvorrichtung (58) umgeschaltet werden kann.

8. Brennkraftmaschine gemäß Anspruch 6 oder 7, **gekennzeichnet durch** Mittel zur Beeinflussung des Drucks in einem Saugrohr (18) der Brennkraftmaschine.

9. Brennkraftmaschine gemäß einem der Ansprüche 6 bis 8, **gekennzeichnet durch** einen Phasensteller (54) zur Änderung der Steuerzeiten für das dem ersten Brennraum (22) und/oder dem zweiten Brennraum (22) zugeordnete Einlassventil (28).

10. Brennkraftmaschine gemäß einem der Ansprüche 6 bis 9, **gekennzeichnet durch** einen Phasensteller (54) zur Änderung der Steuerzeiten für das dem ersten Brennraum (22) und/oder dem zweiten Brennraum (22) zugeordnete Auslassventil (30).

## Claims

1. Method for operating an internal combustion engine having an IC engine (10) which forms at least two combustion chambers (22) which are delimited by cylinders (16) formed in a cylinder housing (12) and pistons (24) guided cyclically up and down therein and in which thermodynamic cyclic processes can be carried out during operation of the internal combustion engine, wherein a gas exchange in the combustion chambers (22) is then controlled, in each case, by means of at least one intake valve (28) and an exhaust valve (30), which are actuated by means of cams (60, 62), and wherein
- a first operating state is provided in which the thermodynamic cyclic processes are carried out both in a first combustion chamber (22) and in a second combustion chamber (22), and
- a second operating state is provided in which the thermodynamic cyclic processes are carried out in the first combustion chamber (22) and the thermodynamic cyclic processes are not carried out in the second combustion chamber (22),
wherein, for switching from the first operating state to the second operating state, a change is made from using a first intake cam (60) to using a second intake cam (62) for actuating the intake valve (28) associated with the first combustion chamber, **characterized in that**
- at least the intake valve (28) associated with the first combustion chamber (22) is closed when actuated by means of the first intake cam (60) before BDC - 60° crankshaft angle or after BDC + 100° crankshaft angle and by means of the second intake cam (62) in the range between BDC - 50° crankshaft angle and BDC + 50° crankshaft angle, and
- for switching from the first operating state to the second operating state, a valve overlap of the intake and exhaust valves associated with the first combustion chamber (22) is adapted, wherein a change is made from using a first exhaust cam (60) to using a second exhaust cam (62) for actuating the exhaust valve (30) associated with the first combustion chamber (22), wherein the second exhaust cam (62) brings about a relatively early exhaust closure in comparison with the first exhaust cam (60).

2. Method according to claim 1, **characterized in that** at least the intake valve (28) associated with the first combustion chamber (22) is closed when actuated by means of the second intake cam (62) in the range between BDC - 20'°crankshaft angle and BDC + 30'°crankshaft angle.

3. Method according to any of the preceding claims, **characterized in that,** after switching from the first operating state to the second operating state, the pressure in an intake manifold (18) of the internal combustion engine is increased.

4. Method according to any of the preceding claims, **characterized in that,** for switching from the first operating state to the second operating state, an ignition angle is adjusted in the direction of retard for the first combustion chamber (22).

5. Method according to any of the preceding claims, **characterized in that,** after switching from the first operating state to the second operating state, the control times for the intake valve (28) associated with the first combustion chamber (22) are
- adjusted in the direction of advance if, for the first operating state, an intake closure was provided before BDC, or
- adjusted in the direction of retard if, for the first operating state, an intake closure was provided after BDC.

6. Internal combustion engine having an IC engine (10) which forms at least two combustion chambers (22) which are delimited by cylinders (16) formed in a cylinder housing (12) and pistons (24) guided cyclically to and fro therein and in which thermodynamic cyclic processes can be carried out during operation of the internal combustion engine, wherein a gas exchange in the combustion chambers (22) can be controlled, in each case, by means of an intake valve (28) and an exhaust valve (30), which are actuated by means of cams (60, 62), and wherein, for the intake valve (28) associated with a first combustion chamber (22), two intake cams (60, 62) are provided and, for the exhaust valve (30) associated with the first combustion chamber (22), two exhaust cams (60, 62) are provided, between the use of which it is possible to switch by means of a switching device (58), **characterized by** a control device (52) programmed in such a way that it can carry out a method according to any of the preceding claims.

7. Internal combustion engine according to claim 6, **characterized by** two exhaust cams (60, 62) for the exhaust valve (30) associated with the second combustion chamber (22), between the use of which it is possible to switch by means of a switching device (58).

8. Internal combustion engine according to claim 6 or 7, **characterized by** means for influencing the pressure in an intake manifold (18) of the internal combustion engine.

9. Internal combustion engine according to any of claims 6 to 8, **characterized by** a phase adjuster (54) for changing the control times for the intake valve (28) associated with the first combustion chamber (22) and/or the second combustion chamber (22).

10. Internal combustion engine according to any of claims 6 to 9, **characterized by** a phase adjuster (54) for changing the control times for the exhaust valve (30) associated with the first combustion chamber (22) and/or the second combustion chamber (22).

## Revendications

1. Procédé pour faire fonctionner un moteur à combustion interne comportant un moteur à combustion (10), qui forme au moins deux chambres de combustion (22), qui sont délimitées par des cylindres (16) formés dans un logement de cylindres (12) et des pistons (24) guidés en va-et-vient vertical dans ceux-ci de manière cyclique et dans lesquels, lorsque le moteur à combustion interne est en fonctionnement, des cycles thermodynamiques peuvent avoir lieu, dans lequel un échange gazeux dans les chambres de combustion (22) est alors commandé par le biais respectivement d'au moins une soupape d'admission (28) et une soupape d'échappement (30), qui sont actionnées par le biais de cames (60, 62) et dans lequel
- un premier état de fonctionnement est prévu, dans lequel les cycles thermodynamiques ont lieu aussi bien dans la première chambre de combustion (22) que dans la seconde chambre de combustion (22) et
- un second état de fonctionnement est prévu, dans lequel les cycles thermodynamiques ont lieu dans la première chambre de combustion (22) et les cycles thermodynamiques n'ont pas lieu dans la seconde chambre de combustion (22),
dans lequel, pour une commutation du premier état de fonctionnement au second état de fonctionnement, on passe d'une utilisation d'une première came d'admission (60) à l'utilisation d'une seconde came d'admission (62) pour l'actionnement de la soupape d'admission (28) associée à la première chambre de combustion, **caractérisé en ce que**
- au moins la soupape d'admission (28) associée à la première chambre de combustion (22) est fermée lors d'un actionnement par le biais de la première came d'admission (60) avant PMB - 60° d'angle de vilebrequin ou après PMB + 100° d'angle de vilebrequin et par le biais de la seconde came d'admission (62) dans la plage entre PMB - 50° d'angle de vilebrequin et PMB + 50° d'angle de vilebrequin et
- pour une commutation du premier état de fonctionnement au second état de fonctionnement, un chevauchement de soupapes des soupapes d'admission et d'échappement associées à la première chambre de combustion (22) est adapté, dans lequel on passe d'une utilisation d'une première came d'échappement (60) à l'utilisation d'une seconde came d'échappement (62) pour l'actionnement de la soupape d'échappement (30) associée à la première chambre de combustion (22), dans lequel la seconde came d'échappement (62) entraîne une fermeture relativement précoce de l'échappement par comparaison avec la première came d'échappement (60).

2. Procédé selon la revendication 1, **caractérisé en ce qu'**au moins la soupape d'admission (28) associée à la première chambre de combustion (22) est fermée lors d'un actionnement par le biais de la seconde came d'admission (62) dans la plage entre PMB - 20'° d'angle de vilebrequin et
PMB + 30'° d'angle de vilebrequin.

3. Procédé selon l'une des revendications précédentes,
**caractérisé en ce que,** après la commutation du premier état de fonctionnement au second état de fonctionnement, la pression dans une tubulure d'aspiration (18) du moteur à combustion interne est augmentée.

4. Procédé selon l'une des revendications précédentes,
**caractérisé en ce que,** pour la commutation du premier état de fonctionnement au second état de fonctionnement, un angle d'allumage pour la première chambre de combustion (22) est décalé dans la direction retard.

5. Procédé selon l'une des revendications précédentes,
**caractérisé en ce que,** après la commutation du premier état de fonctionnement au second état de fonctionnement, les temps de commande pour la soupape d'admission (28) associée à la première chambre de combustion (22)
- sont décalés dans la direction avance, quand, pour le premier état de fonctionnement, une fermeture d'admission avant le PMB était prévue ou
- sont décalés dans la direction retard, quand, pour le premier état de fonctionnement, une fermeture d'admission après le PMB était prévue.

6. Moteur à combustion interne comportant un moteur à combustion (10), qui forme au moins deux chambres de combustion (22), qui sont délimitées par des cylindres (16) formés dans un logement de cylindres (12) et des pistons (24) guidés en va-et-vient vertical dans ceux-ci de manière cyclique et dans lesquels, lorsque le moteur à combustion interne est en fonctionnement, des cycles thermodynamiques peuvent avoir lieu, dans lequel un échange gazeux dans les chambres de combustion (22) peut être commandé par le biais respectivement d'une soupape d'admission (28) et d'une soupape d'échappement (30), qui sont actionnées par le biais de cames (60, 62) et dans lequel, pour la soupape d'admission (28) associée à une première chambre de combustion (22), deux cames d'admission (60, 62) sont prévues et, pour la soupape d'échappement (30) associée à la première chambre de combustion (22), deux cames d'échappement (60, 62) sont prévues, une commutation entre l'utilisation desquelles étant possible au moyen d'un dispositif de commutation (58), **caractérisé par** un dispositif de commande (52), qui est programmé de manière à pouvoir exécuter un procédé selon l'une des revendications précédentes.

7. Moteur à combustion interne selon la revendication 6, **caractérisé par** deux cames d'échappement (60, 62) pour la soupape d'échappement (30) associée à la seconde chambre de combustion (22), une commutation entre l'utilisation desquelles étant possible par le biais d'un dispositif de commutation (58).

8. Moteur à combustion interne selon la revendication 6 ou 7,
**caractérisé par** des moyens pour influencer la pression dans une tubulure d'aspiration (18) du moteur à combustion interne.

9. Moteur à combustion interne selon l'une des revendications 6 à 8, **caractérisé par** un déphaseur (54) pour modifier les temps de commande de la soupape d'admission (28) associée à la première chambre de combustion (22) et/ou à la seconde chambre de combustion (22).

10. Moteur à combustion interne selon l'une des revendications 6 à 9, **caractérisé par** un déphaseur (54) pour modifier les temps de commande de la soupape d'échappement (30) associée à la première chambre de combustion (22) et/ou à la seconde chambre de combustion (22).
